# EUROPÄISCHE PATENTANMELDUNG

(11) **EP 2 008 526 A2**
(43) Veröffentlichungstag der Anmeldung: **31.12.2008**
(21) Anmeldenummer: 08010177.7
(22) Anmeldetag: 04.06.2008
(51) Int. Cl.: A23F 3/16, A23L 2/42, A23L 3/36, B65D 85/804

(54) **Verfahren zur Herstellung eines Heißgetränks aus einem Lebensmittel**

(30) Priorität: 29.06.2007 DE 102007030353; 19.05.2008 DE 102008024223
(71) Anmelder: Schneider, Jürgen, 69168 Wiesloch-Baiertal (DE)
(72) Erfinder: Schneider, Jürgen, 69168 Wiesloch-Baiertal (DE)
(74) Vertreter: Mierswa, Klaus

(57) **Zusammenfassung**

Die Erfindung betrifft ein Verfahren zur Herstellung eines Heißgetränlcs aus einem Lebensmittel als Ausgangsstoff, welcher aus Tee- oder Kräuterblättern oder Pilzen oder Gemüsen oder einer Mischung hiervon oder Beeren besteht. Der Ausgangsstoff wird nach der Ernte in frischem Zustand zu einem Brei zerkleinert und dieser Brei wird in gasdichte Portionsverpackungen, wie Partionskapseln oder -pads, portioniert abgefüllt, wonach die Portionsverpackungen nach dem Abfüllvorgang eingefroren werden, und dieselben einer solchen Kaltlagerung ausgesetzt werden, welche das Auftauen der gefrorenen Portionsverpackurtgen verhindert und die Portlonsverpackungen erst zum Verbrauch aufgetaut werden.

## Beschreibung

Die Erfindung betrifft ein Verfahren zur Herstellung eines Heißgetränks aus einem Lebensmittel als Ausgangsstoff, welcher aus Tee- oder Kräuterblättern oder Pilzen oder Gemüsen oder einer Mischung hiervon oder Beeren besteht, gemäß dem Oberbegriff des Anspruchs 1. Ebenso betrifft die Erfindung Portionskapseln mit derartigen Tees oder Kräutern oder Pilzen oder Pilzen oder Gemüsen, nach dem Oberbegriff des Anspruchs 8.

### Stand der Technik:

Beim Grünen Tee oder Grüntee sind die Teeblätter nicht, wie beim schwarzen Tee, fermentiert. Grüner Tee unterscheidet sich vom schwarzen auch in der Zubereitung, im Geschmack, den Inhaltsstoffen und den Wirkungen des Aufgusses. Nach dem Welken der frisch gepflückten Blätter verhindert ein kurzes Erhitzen, Rösten oder Dämpfen der Teeblätter die Fermentation. Dadurch bleiben die meisten im frischen Blatt enthaltenen Wirkstoffe erhalten; die Umwandlung der Inhalte u.a. in Aromastoffe ist zum großen Teil unterbunden.

Durch die DE 1933585 A1 ist ein Verfahren zur kontinuierlichen Vakuumgefriertrocknung schüttfähigen Gutes, wie durch Einfrieren einer Extraktionslösung aus Röstkaffee, Tee oder dergleichen und nachfolgendes Zerkleinern der Gefriermasse gewonnenes Granulat bekannt geworden, welches mittels Eintragschleusen in einen Gefriertrockner eingebracht, dort unter gesteuerter Wärmezufuhr einem Trocknungsprozess unterworfen und dann mittels Austragschleusen als Trockengut aus dem Trockner abgezogen wird. Das Gut wird ganz oder teilweise in einer Wirbel- oder Fliessschicht, deren Querschnitt sich nach oben erweitert, getrocknet, wobei die Trocknungswärme wenigstens zum Teil durch Kontakt von den Heizquellen auf das Gut übertragen wird.

Durch die DE 2304073 A1 ist ein Verfahren zur Herstellung von schwarzem Tee bekannt geworden, wobei unfermentierter Tee zu schwarzem Tee in Gegenwart von natürlichen Tee-Enzymen konvertiert wird. Dabei wird der unfermentierte Tee mit Tannase vor seiner Konvertierung zu schwarzem Tee zusammengebracht.

Durch die DE 19526808 A1 ist ein Verfahren zum Gefriertrocknen von Tee-Extrakt bekannt geworden, wobei Tee-Extrakt mit einem Trockenstoffgehalt von 18 bis 22 Gew./Vol.-% bis zu einem Schaumgewicht von 400 bis 600 g/l aufschäumt wird. Anschließend tropft der aufgeschäumte Tee-Extrakt zur Bildung von Pellets auf ein gekühltes Band, wobei die Pellets auf dem Band auf Temperaturen unterhalb -25°C eingefroren werden. Die eingefrorenen Pellets werden bei Drücken getrocknet, welche um den Faktor 3 bis 5 oberhalb derjenigen Drücke liegen, die üblicherweise zum Gefriertrocknen von gemahlenem Tee-Granulat angewendet werden. Die Schaumtemperatur am Ende des Aufschäum-Vorganges beträgt zwischen -2,0 bis -4,0°C. Des Weiteren wird der aufgeschäumte Tee-Extrakt jeweils in einer solchen Menge auf das gekühlte Band aufgetropft, dass Pellets mit einem Durchmesser von 4 bis 7 mm und mit einer Höhe von etwa 2,5 bis 3,5 mm entstehen. Es entsteht somit ein gefriergetrockneter Tee-Extrakt in Pellet-Form.

Durch die DE 102004056224 A1 ist ein System mit einer Kaffeemaschine, die zum Brühen eines heißen Getränks, insbesondere Kaffeegetränks, mittels einer Portionskapsel mit einem Kapseldeckel und einem Kapselboden eingerichtet ist, bekannt geworden, welches zusätzlich eine Druckwassereinrichtung, einen Portionskapselhalter und eine Steuerung aufweist. Dem Portionskapselhalter sind zwei relativ zueinander bewegbare Aufstechmittel zugeordnet, die dazu eingerichtet sind, beim oder nach dem Einsetzen der Portionskapsel in den Portionskapselhalter den Kapseldeckel sowie den Kapselboden zu durchstoßen, so dass heißes Wasser durch den Kapseldeckel in den Innenraum der Portionskapsel und Getränk durch den Kapselboden aus der Portionskapsel gelangen kann. Das System weist eine Portionskapsel mit einem Kapseldeckel und einem Kapselboden auf, die im Lieferzustand allseitig geschlossen ist und eine partikelförmige, mittels Wasser extrahierbare Getränkesubstanz, vorzugsweise Kaffeesubstanz, enthält. Zwischen Kapseldeckel und Getränkesubstanz ist eine Verteilereinrichtung und/oder zwischen Getränkesubstanz und Kapselboden eine Sammeleinrichtung angeordnet, die jeweils eine Anzahl von Öffnungen und vorzugsweise Prägungen zur Bildung von Flüssigkeitskanälen aufweisen.

Bei den bekannten Verfahren zum Herstellen von grünem oder schwarzem Tee werden somit die Tee-Enzyme durch Dämpfung oder Röstung oder Gefriertrocknung inaktiviert. Dadurch werden neue Aromastoffe gebildet, aber auch gesundheitlich wertvolle Inhaltsstoffe nachteilig verändert oder zerstört.

### Technische Aufgabe:

Der Erfindung liegt die Aufgabe zugrunde, ein Verfahren zur Herstellung eines Heißgetränks aus einem Lebensmittel als Ausgangsstoff, welcher aus Tee- oder Kräuterblättern oder Pilzen oder Gemüsen oder einer Mischung hiervon oder Beeren besteht, zu schaffen, insbesondere zur Herstellung von unfermentiertem oder weitgehend unfermentiertem grünem Tee oder von zur Anfertigung von Tees geeigneten, unfermentierten oder weitgehend unfermentierten Kräutern oder Pilzen, wobei mit dem Verfahren die natürlichen Enzyme des Ausgangsstoffes, wie Tee-Enzyme oder Kräuter-Enzyme oder Pilz-Enzyme, inaktiviert werden ohne Veränderung der Inhaltsstoffe und ohne Bildung von neuen, unerwünschten Aromastoffen, so dass der Geschmack des gewählten Ausgangsstoffes weitestgehend erhalten bleibt.

### Offenbarung der Erfindung und deren Vorteile:

Gelöst wird die Aufgabe durch das erfindungsgemäßes Verfahren zur Herstellung eines Heißgetränks aus einem Lebensmittel als Ausgangsstoff, welcher aus Teeoder Kräuterblättern oder Pilzen oder Gemüsen oder einer Mischung hiervon oder Beeren besteht, dadurch, dass der Ausgangsstoff nach der Ernte in frischem Zustand zu einem Brei zerkleinert wird und dieser Brei in gasdichte Portionsverpackungen, wie Portionskapseln oder -pads, portioniert abgefüllt wird und die Portionsverpackungen nach dem Abfüllvorgang eingefroren werden, wonach dieselben einer solchen Kaltlagerung ausgesetzt werden, welche das Auftauen der gefrorenen Portionsverpackungen verhindert und die Portionsverpackungen erst zum Verbrauch aufgetaut werden.

Der Vorteil des erfindungsgemäßen Verfahrens besteht darin, dass die Enzyme der Ausgangsstoffe, wie zum Beispiel die natürlichen Tee-Enzyme oder Kräuter-oder Pilz- oder Gemüseenzyme, durch Kälteeinwirkung inaktiviert werden und dadurch innerhalb des Breis keine Veränderung der Inhaltsstoffe oder eine Bildung von neuen, unerwünschten Aromastoffen erfolgen kann. Durch die Inaktivierung des Breis durch Kälte, Portionierung unter Kälte und Beibehaltung der Kühlkette bis zum Verbrauch - wie übliche Tiefkühlkost - bleiben die natürlichen, gesundheitlich wertvollen Inhaltsstoffe weitgehend unverändert und erhalten.

Ein weiterer Vorteil besteht darin, dass die Portionsverpackungen portioniert vorliegen, wobei zum Auftauen und Aufbrechen der Portionsverpackungen und Freisetzen des gefrorenen Breis, wenn es sich beispielsweise um gängige Portionskapseln oder -pads handelt, diese in vorhandene Kaffeemaschinen für Kaffee-Portionskapseln oder -pads eingesetzt werden können. Es erfolgt somit eine gleiche Behandlung der Tee- oder Kräuter- oder Pilz- oder Gemüse- oder Beeren-Portionsverpackungen wie Kaffee-Portionsverpackungen, wobei der Heißdampf den gefrorenen Brei sofort aufzutauen imstande ist. Beispielsweise können die bekannten Cafissimo-Kapseln des Standes der Technik vorteilhaft zur Durchführung der Erfindung eingesetzt werden.

In weiterer erfindungsgemäßer Ausgestaltung werden die Blätter bzw. verwendeten Teile des Ausgangsstoffs während der Zubereitung des Breis gekühlt und einer Kälteeinwirkung von -25 Grad Celsius bis 0 Grad Celsius, vorzugsweise von -15 Grad Celsius bis 0 Grad Celsius, ausgesetzt; dergestalt wird ein Kaltbrei erzeugt, welcher anschließend in gasdichte Portionsverpackungen, wie Portionskapseln, portioniert abgefüllt und die Portionsverpackungen eingefroren werden, wonach anschließend bis zum Verbrauch dieselben einer solchen Kaltlagerung ausgesetzt werden, welche das Auftauen der gefrorenen Portionsverpackungen verhindert.

In weiterer erfindungsgemäßer Ausgestaltung kann die Kälteeinwirkung ein Tiefgefrieren sein, so dass die Portionsverpackungen tiefgefroren werden. Oder die Kälteeinwirkung erfolgt entweder auf die Portionsverpackungen oder schon auf den Brei und anschließend nach dem Abfüllen in die Portionsverpackungen auch auf dieselben, wobei die Kälteeinwirkung eine solche von -25 Grad Celsius bis 0 Grad Celsius, vorzugsweise von -15 Grad Celsius bis 0 Grad Celsius, ist.

In weiterer erfindungsgemäßer Ausgestaltung wird das Verfahren unter einem Schutzgas, wie CO₂/N₂, durchgeführt.

Die Portionierung des Kältebreis kann zum Beispiel in Portionskapseln gemäß der Patentanmeldung DE 10 2004 056 224 A1 der Firma Tchibo erfolgen. Bei der Verwendung der gefrorenen Portionskapseln hat sich das System der Tchibo-Kapsel zusammen mit der Tchibo-Kaffeemaschine "Cafissimo" als besonders vorteilhaft erwiesen.

Beispielsweise können in solchen aromadichten Kapseln als Portionsverpackungen gefrorene Tee- oder Kräuter- oder Pilz- oder Gemüse- oder Beerenportionen von 1 g bis 7 g portioniert werden, wobei hinreichend Platz für das Schwellvolumen des Ausgangsstoffs innerhalb der Portionsverpackungen vorhanden ist. In bekannter Weise beträgt die geeignete Aufbrühtemperatur 65-90°C; eine Wasserportionierung bis 450ml in einem Durchgang ist möglich bei einer Aufbrühzeit zwischen 1-4 Minuten. Aufgrund des auf den Ausgangsstoffs innerhalb der Portionskapsel ausgeübten Drucks ist eine intensivere Extraktion möglich, als es bei der Anfertigung von Tee gemäß dem Stand der Technik möglich ist, insbesondere durch das Aufgeben eines variablen Drucks bis 15 bar.

Eine erfindungsgemäße Portionskapsel mit einem Kapseldeckel und einem Kapselboden oder ein Portionspad, welche jeweils im Lieferzustand allseitig geschlossen ist und ein partikelförmiges, mittels Wasser extrahierbares Lebensmittel als Ausgangsstoff zur Herstellung eines Heißgetränks enthält, und der Ausgangsstoff aus Tee- oder Kräuterblättern oder Pilzen oder Gemüsen oder einer Mischung hiervon oder aus Beeren besteht, wobei zwischen Kapseldeckel oder Padoberseite und Ausgangsstoff eine Verteilereinrichtung und/oder zwischen dem Ausgangsstoff und dem Kapselboden oder Padunterseite eine Sammeleinrichtung angeordnet ist, die jeweils eine Anzahl von Öffnungen und vorzugsweise Prägungen zur Bildung von Flüssigkeitskanälen aufweisen, wobei der Boden eine Sollschwachstelle aufweist, ist dadurch gekennzeichnet, dass der Ausgangsstoff in Form eines gefrorenen Breis in der gefrorenen Portionskapsel enthalten ist.

In weiterer Ausgestaltung der Portionskapsel ist innerhalb derselben hinreichend Platz für das Schwellvolumen des Ausgangsstoffs während des Auftau- und Aufbrühvorgangs vorhanden.

In weiterer Ausgestaltung ist dem Inhalt der Portionskapseln bei Verwendung von grünem Tee demselben Jasmin beigemischt.

Die Erfindung schlägt des Weiteren eine Portionskapsel oder ein Portionspad vor, in welcher die unfermentierten oder weitgehend unfermentierten Kräuter oder Pilze solche von Pfefferminz, Brennnessel, Melisse, Birke, Löwenzahn, Artischocke, Ginseng, Ingwer oder Ganoderma Lucidum sind oder in welcher die Gemüse solche von Zwiebel, Petersilie, Rote Beete, Sellerie oder Artischocke sind oder in welcher die Beeren Sanddorn, Brombeeren, Erdbeeren, Himbeeren oder Blaubeeren sind.

In weiterer Ausgestaltung der Erfindung ist der gefrorene Brei aus Teeblättern oder Kräutern oder Pilzen oder Gemüsen oder Beeren innerhalb der Portionskapsel oder innerhalb des Portionspads tiefgefroren.

Eine weitere erfindungsgemäße Variante des Verfahrens zur Herstellung eines Getränks aus einem Ausgangsstoff, welcher aus Tee- oder Kräuterblättern oder Pilzen oder Gemüsen oder einer Mischung hiervon oder aus Beeren besteht, ist dadurch gekennzeichnet, dass der Ausgangsstoff nach der Ernte entweder getrocknet oder in frischem Zustand jeweils zu einem Pulver mit einer Feinheit der verwendeten Teile zwischen 0,05mm bis 4mm, vorzugsweise zwischen 0,1 bis 3mm, höchst vorzugsweise zwischen 0,5 bis 2mm, zerkleinert und bei Verarbeitung in frischem Zustand anschließend getrocknet wird, und die jeweils so erhaltene Trockenmasse des Ausgangsstoffs in gasdichte Portionsverpackungen, wie Portionskapseln oder -pads, portioniert abgefüllt wird.

Eine weitere erfindungsgemäße Portionskapsel, mit einem Kapseldeckel und einem Kapselboden, oder Portionspad, welche/r je im Lieferzustand allseitig geschlossen ist und ein partikelförmiges oder pulverförmiges, mittels Wasser extrahierbares Lebensmittel als Ausgangsstoff zur Herstellung eines Heißgetränks enthält, und der Ausgangsstoff aus Tee- oder Kräuterblättern oder Pilzen oder Gemüsen oder einer Mischung hiervon oder aus Beeren besteht, wobei zwischen Kapseldeckel oder Padoberseite und dem Lebensmittel eine Verteilereinrichtung und/oder zwischen dem Lebensmittel und dem Kapselboden oder Padunterseite eine Sammeleinrichtung angeordnet ist, die jeweils eine Anzahl von Öffnungen und vorzugsweise Prägungen zur Bildung von Flüssigkeitskanälen aufweisen, wobei der Boden eine Sollschwachstelle aufweist, ist dadurch gekennzeichnet, dass innerhalb der Kapsel oder des Pads als Lebensmittel eine Fertigsuppe, oder Kakaopulver, oder Milchpulver oder ein andere Pulver, welches zur Herstellung eines Heißgetränks geeignet ist, angeordnet ist, wie beispielsweise Pulver aus Tee- oder Kräuterblättern oder Pilzen oder Gemüsen oder einer Mischung hiervon oder aus Beeren.

In weiterer erfindungsgemäßer Ausgestaltung können statt der Portionskapseln auch Portionspads verwendet werden, welche in den entsprechenden Maschinen für Portionspads Anwendung finden. Wesentlich ist, dass auch diese Pads, wie die Portionskapseln, aromadicht verschlossen sind.

Anschließend sind zwei praktische Beispiele zur Durchführung der Erfindung wiedergegeben:
Beispiel mit frischen Teeblättern von Camellia sinensis aus dem botanischen Garten der Wilhelma-Stuttgart:
   Tiefgekühlte Blätter mit Ultraturax/Mixer zu Brei zerkleinert - Teilchen 0,2-5mm
   6 g Abfüllung unter Co₂ in Tchibo-Kapsel "blau"
   Tiefgefroren bei -15°C
   10 Tage gelagert
   Die Kapsel wird tiefgeforen in eine Cafissimo-Kaffeemaschine eingesetzt.

Es erfolgt die Gewinnung des Getränks:
1. Durchlauf durch eine Portionskapsel:

| ml Tee | Tee-Temperatur | durchgelaufen in Sek. |
|---|---|---|
| 50 | 85 | 12 |
| 100 | 90 | 26 |
| 150 | 90 | 35 |

Diese Aufbereitung ergibt einen starken grünen Tee.
2. Durchlauf durch eine Portionskapsel:

| ml Tee | Tee-Temperatur | durchgelaufen in Sek. |
|---|---|---|
| 50 | 82 | 12 |
| 75 | 86 | 20 |
| 100 | 88 | 26 |
| 125 | 90 | 30 |

Diese Aufbereitung ergibt einen milderen grünen Tee.

Des Weiteren ist es möglich, auch Tees, insbesondere grüne Tees, noch erfindungsgemäß zu bearbeiten, welche schon eine beginnende Fermentation zeigen, die sogenannte Anfermentation. Diese zeigt sich darin, dass die helle und/oder dunkelgrüne Farbe der Teeblätter teilweise in ein bräunlich-grün übergegangen ist. Das ist ein typisches Zeichen einer beginnenden Fermentation durch die Polyphenoloxidasen und Peroxidasen, die sich im Inneren der Blattzellen befinden.

Auch verschiedene andere Kräuter weisen derartige Polyphenoloxidasen und Peroxidasen auf.

Blätter von Tees oder von Kräutern werden erfindungsgemäß ebenso zu einem Brei verarbeitet und tiefgefroren.

Bei der Herstellung eines Schwarztees wird ein Grüntee einer längeren Fermentation bei Wärme ausgesetzt; anschließend erfolgt eine Trocknung und Sichtung. Durch die Fermentation erfolgt eine Umwandlung der Catechine und eine Neubildung so genannter Theaflavine und Thearubigen, die im Grüntee noch nicht vorhanden sind.

Theaflavinen und Thearubigenen wird heute zunehmend Bedeutung hinsichtlich gesundheitsfördernder Wirkung zugewiesen. Diese Substanzen wirken ebenfalls antioxidativ. Beispielsweise haben Theaflavine anticancerogene, antioxidative und kardioprotective Wirkungen.

Erfindungsgemäß hat sich gezeigt, dass bei der Analyse der Extrakte aus den gefrorenen Teeproben, hergestellt gemäß der Erfindung, dass in überraschender Weise hohe Werte an Theaflavinen in den Teeproben gefunden worden sind. Im Vergleich hierzu zum untersuchten Schwarztee wurde die 3- bis 4-fache Menge an Theaflavinen gefunden.

Durch den Transport der Teeblätter unter teilweise anaeroben Bedingungen unter Luftabschluss und 100% Luftfeuchtigkeit, oder mehr oder weniger als 100% Luftfeuchtigkeit, bei Temperaturen von 20 - 25 Grad Celsius setzt eine gewisse Anfermentation ein, was zur Bildung von Theaflavinen führt, die im normalen Grüntee sonst nicht vorkommen.

Dadurch ist erfindungsgemäß ein neues Produkt von Grüntee entstanden, nämlich Grüntee mit Theaflavinen. Dieses Befördern von Theaflavinen kann auch durch gezielte Fermentation in Silos unter kontrollierten, sauerstoffarmen Bedingungen erzielt werden.

### Auswertung der HPLC-Flächen:

| | |
|---|---|
| Aufguss Aaracha gefroren 1: | 998 |
| Aufguss Aaracha gefroren 1:a | 1021 |
| Kapselaufguss Aaracha gefroren: | 1193 |
| Aufguss Aaracha normal, trocken: | Null |
| Aufguss Schwarztee normal, trocken: (zum Vergleich). | 305 |

Somit können patentgemäß verfahrensmäßig zur Herstellung von unfermentiertem oder weitgehend unfermentiertem grünem Tee oder von zur Anfertigung von Tees geeigneten, unfermentierten oder weitgehend unfermentierten Kräutern oder Pilzen oder Gemüsen oder Beeren auch getrocknete Ausgangsstoffe für die Herstellung eines Heißgetränks verwendet werden. Das Verfahren ist dadurch gekennzeichnet, dass die Teeblätter oder Kräuterblätter oder Pilze oder Gemüse oder Beeren nach der Ernte entweder getrocknet oder in frischem Zustand jeweils zu einem Pulver der Feinheit zwischen 0,05mm bis 4mm, vorzugsweise zwischen 0,1 bis 3mm, höchst vorzugsweise zwischen 0,5 bis 2mm, zerkleinert und bei Verarbeitung in frischem Zustand anschließend getrocknet werden, und das jeweils so erhaltene Trockenpulver in gasdichte Portionsverpackungen, wie Portionskapseln oder -pads, portioniert abgefüllt wird.

In weiterer erfindungsgemäßer Ausgestaltung des Verfahrens können Portionskapseln, mit einem Kapseldeckel und einem Kapselboden, oder Portionspads, zur Verwendung gelangen, welche je im Lieferzustand allseitig geschlossen sind und ein partikelförmiges oder pulverförmiges, mittels Wasser extrahierbares Lebensmittel zur Herstellung eines Heißgetränks enthalten, wobei zwischen Kapseldeckel oder Padoberseite und Lebensmittel eine Verteilereinrichtung und/oder zwischen dem Lebensmittel und dem Kapselboden oder Padunterseite eine Sammeleinrichtung angeordnet ist, die jeweils eine Anzahl von Öffnungen und vorzugsweise Prägungen zur Bildung von Flüssigkeitskanälen aufweisen, wobei der Boden eine Sollschwachstelle aufweist. Innerhalb der Kapsel/Pads ist als Lebensmittel eine Fertigsuppe, oder Kakaopulver, oder Milchpulver oder andere Pulver, welche zur Herstellung eines Heißgetränks geeignet sind, angeordnet.

Zur Herstellung eines Tees aus einem Trockenmaterial wird eine Feinheit in sogenannter Teebeutelqualität benötigt, also mit einer Feinheit der verwendeten Teile zwischen 0,05mm bis 4mm, vorzugsweise zwischen 0,1 bis 3mm, höchst vorzugsweise zwischen 0,5 bis 2mm. Derartige Teile werden auch als "fein geschnitten" bezeichnet. Die Portionskapseln gemäß der Patentanmeldung DE 10 2004 056 224 A1 der Firma Tchibo (Caffissimo-Kapseln) haben sich auch in dieser Variante der Erfindung als besonders vorteilhaft für den patentgemäßen Einsatz erwiesen, weil diese für die verschiedenen Qualitäten unterschiedliche Siebeinsätze aufweisen, damit die Druck- und Filtrationsverhältnisse und dadurch das Extraktionsergebnis optimiert wird. Als Optimum zwischen Siebfeinheit und Teefeinheit ist anzustreben, dass das Filtrationsergebnis des Heißgetränks nicht viele sogenannte Flusen enthält.

Gleichermaßen können die Portionskapseln - insbesondere diejenigen gemäß der DE 10 2004 056 224 A1 - auch zur Herstellung von anderen Heißgetränken verwendet werden, beispielsweise zur Herstellung von Suppen, von Kakaogetränken aus Kakaopulver, von Milchgetränken aus Milchpulver, von heiße Zitrone-Getränk aus einem Pulver mit Zitrone, welche Ausgangsstoffe in den Portionskapseln enthalten sind. Eine derartige Portionierung von pulverisierten Lebensmitteln zur Herstellung eines Heißgetränks hat den Vorteil, dass die Portionen sofort einsatzbereit sind und das Heißgetränk in weniger als drei Minuten trinkfertig ist. Von besonderem Vorteil ist, dass derartige Portionskapseln, welche ein pulverisiertes Lebensmittel zur Herstellung eines Heißgetränks enthalten, in den schon vorhandenen Maschinen zur Herstellung eines Portionskapsel-Kaffees verwendet werden können, ohne dass hierfür Veränderungen an den Maschinen notwendig sind.

### Gewerbliche Anwendbarkeit:

Der Gegenstand der Erfindung ist insbesondere zur Herstellung von grünem Tee sowie von Kräuter- oder Pilztees oder Gemüse- oder Beerensäften geeignet, welche schonend und unter weitestgehendem Erhalt der Inhaltsstoffe hergestellt sind. Insbesondere weist ein derartig hergestellter Grüntee einen hohen Gehalt an Theaflavinen auf. Ebenso werden aus den tiefgefrorenen Gemüsebreien oder trocken abgefüllten Gemüsepulvern sehr gut trinkbare Gemüsesäfte erhalten. Auf dem Gebiet der Naturkost und alternativen Naturheilmitteln werden derartige Gemüse oder Beeren, als Tee oder Saft zubereitet, empfohlen.

## Patentansprüche

1. Verfahren zur Herstellung eines Heißgetränks aus einem Lebensmittel als Ausgangsstoff, welcher aus Tee- oder Kräuterblättern oder Pilzen oder Gemüsen oder einer Mischung hiervon oder Beeren besteht,
**dadurch gekennzeichnet,**
**dass** der Ausgangsstoff nach der Ernte in frischem Zustand zu einem Brei zerkleinert wird und dieser Brei in gasdichte Portionsverpackungen, wie Portionskapseln oder -pads, portioniert abgefüllt wird und die Portionsverpackungen nach dem Abfüllvorgang eingefroren werden, wonach dieselben einer solchen Kaltlagerung ausgesetzt werden, welche das Auftauen der gefrorenen Portionsverpackungen verhindert und die Portionsverpackungen erst zum Verbrauch aufgetaut werden.

2. Verfahren nach Anspruch 1, **dadurch gekennzeichnet,**
**dass** der Brei während seiner Zubereitung gekühlt wird und einer Kälteeinwirkung von -25 Grad Celsius bis 0 Grad Celsius, vorzugsweise von -15 Grad Celsius bis 0 Grad Celsius, ausgesetzt und ein Kaltbrei erzeugt wird, welcher anschließend in gasdichte Portionsverpackungen, wie Portionskapseln oder -pads, portioniert abgefüllt und die Portionsverpackungen eingefroren werden, wonach anschließend bis zum Verbrauch dieselben einer solchen Kaltlagerung ausgesetzt werden, welche das Auftauen der gefrorenen Portionsverpackungen verhindert.

3. Verfahren nach Anspruch 1, **dadurch gekennzeichnet,**
**dass** die Kälteeinwirkung ein Tiefgefrieren ist und die Portionsverpackungen tiefgefroren werden.

4. Verfahren nach Anspruch 1, oder 2 **dadurch gekennzeichnet,**
**dass** die Kälteeinwirkung entweder auf die Portionsverpackungen oder schon auf den Brei und anschließend nach dem Abfüllen in die Portionsverpackungen auch auf dieselben eine solche Kälteeinwirkung von -25 Grad Celsius bis 0 Grad Celsius, vorzugsweise von -15 Grad Celsius bis 0 Grad Celsius, ist.

5. Verfahren nach einem der vorherigen Ansprüche, **dadurch gekennzeichnet, dass** dasselbe unter einem Schutzgas, wie CO₂/N₂, durchgeführt wird.

6. Verfahren nach einem der vorhergehenden Ansprüche,
**dadurch gekennzeichnet, dass** dasselbe zur Herstellung eines Tees aus einem gefrorenen Teebrei von unfermentiertem oder weitgehend unfermentiertem grünem Tee oder von zur Anfertigung von Tees geeigneten, unfermentierten oder weitgehend unfermentierten Kräutern oder Pilzen angewendet wird.

7. Verfahren nach einem der vorhergehenden Ansprüche,
**dadurch gekennzeichnet, dass** dasselbe zur Herstellung eines Gemüse- oder Beerensaftes aus einem gefrorenen Gemüse- oder Beerenbrei von Zwiebel, Petersilie, Rote Beete, Sellerie oder Artischocke oder von Sanddorn, Brombeeren, Erdbeeren, Himbeeren oder Blaubeeren angewendet wird.

8. Portionskapsel, mit einem Kapseldeckel und einem Kapselboden, oder Portionspads, welche jeweils im Lieferzustand allseitig geschlossen ist und einen partikelförmiges, mittels Wasser extrahierbares Lebensmittel als Ausgangsstoff zur Herstellung eines Heißgetränks enthält, und der Ausgangsstoff aus Tee- oder Kräuterblättern oder Pilzen oder Gemüsen oder einer Mischung hiervon oder aus Beeren besteht, wobei zwischen Kapseldeckel oder Padoberseite und Ausgangsstoff eine Verteilereinrichtung und/oder zwischen dem Ausgangsstoff und dem Kapselboden oder Padunterseite eine Sammeleinrichtung angeordnet ist, die jeweils eine Anzahl von Öffnungen und vorzugsweise Prägungen zur Bildung von Flüssigkeitskanälen aufweisen, wobei der Boden eine Sollschwachstelle aufweist,
**dadurch gekennzeichnet,**
**dass** der Ausgangsstoff in Form eines gefrorenen Breis in der gefrorenen Portionskapsel enthalten ist.

9. Portionskapsel nach Anspruch 8, **dadurch gekennzeichnet,**
**dass** der Ausgangsstoff ein unfermentierter oder weitgehend unfermentierter grüner Tee ist oder der Ausgangsstoff zur Anfertigung von Tees geeignete, unfermentierte oder weitgehend unfermentierte Kräuter oder Pilze oder Mischungen hiervon aufweist oder der Ausgangsstoff Gemüse oder eine Mischung von Gemüsen oder Beeren aufweist, wobei der Ausgangsstoff in Form eines gefrorenen Breis in der gefrorenen Portionskapsel enthalten ist.

10. Portionskapsel oder -pad nach Anspruch 8 oder 9, **dadurch gekennzeichnet,**
**dass** innerhalb der Portionskapsel oder des -pads hinreichend Platz für das Schwellvolumen des Ausgangsstoffs, wie Tees oder Kräuter oder Pilze oder Gemüse oder Beeren, während des Auftau- und Aufbrühvorgangs vorhanden ist.

11. Portionskapsel oder -pad nach einem der Ansprüche 8, 9 oder 10,
**dadurch gekennzeichnet, dass** bei der Verwendung von grünem Tee demselben Jasmin beigemischt ist.

12. Portionskapsel oder -pad nach einem der Ansprüche 8 bis 11,
**dadurch gekennzeichnet, dass** die unfermentierten oder weitgehend unfermentierten Kräuter oder Pilze solche von Pfefferminz, Brennnessel, Melisse, Birke, Löwenzahn, Artischocke, Ginseng, Ingwer oder Ganoderma Lucidum sind und dass die Gemüse solche von Zwiebel, Petersilie, Rote Beete, Sellerie oder Artischocke sind oder dass die Beeren Sanddorn, Brombeeren, Erdbeeren, Himbeeren oder Blaubeeren sind.

13. Portionskapsel oder -pad nach einem der Ansprüche 8 bis 12,
**dadurch gekennzeichnet, dass** der gefrorene Brei aus Teeblättern oder Kräutern oder Pilzen oder Gemüsen oder Beeren innerhalb der Portionskapsel tiefgefroren ist.

14. Verfahren zur Herstellung eines Getränks aus einem Ausgangsstoff, welcher aus Tee- oder Kräuterblättern oder Pilzen oder Gemüsen oder einer Mischung hiervon oder aus Beeren besteht, **dadurch gekennzeichnet,**
**dass** der Ausgangsstoff nach der Ernte entweder getrocknet oder in frischem Zustand jeweils zu einem Pulver mit einer Feinheit der verwendeten Teile zwischen 0,05mm bis 4mm, vorzugsweise zwischen 0,1 bis 3mm, höchst vorzugsweise zwischen 0,5 bis 2mm, zerkleinert und bei Verarbeitung in frischem Zustand anschließend getrocknet wird, und die jeweils so erhaltene Trockenmasse des Ausgangsstoffs in gasdichte Portionsverpackungen, wie Portionskapseln oder -pads, portioniert abgefüllt wird.

15. Portionskapsel, mit einem Kapseldeckel und einem Kapselboden, oder Portionspad, welche/r je im Lieferzustand allseitig geschlossen ist und ein partikelförmiges oder pulverförmiges, mittels Wasser extrahierbares Lebensmittel als Ausgangsstoff zur Herstellung eines Heißgetränks enthält, und der Ausgangsstoff aus Tee- oder Kräuterblättern oder Pilzen oder Gemüsen oder einer Mischung hiervon oder aus Beeren besteht, wobei zwischen Kapseldeckel oder Padoberseite und dem Lebensmittel eine Verteilereinrichtung und/oder zwischen dem Lebensmittel und dem Kapselboden oder Padunterseite eine Sammeleinrichtung angeordnet ist, die jeweils eine Anzahl von Öffnungen und vorzugsweise Prägungen zur Bildung von Flüssigkeitskanälen aufweisen, wobei der Boden eine Sollschwachstelle aufweist, **dadurch gekennzeichnet,**
**dass** innerhalb der Kapsel oder des Pads als Lebensmittel eine Fertigsuppe, oder Kakaopulver, oder Milchpulver oder andere Pulver, welche zur Herstellung eines Heißgetränks geeignet sind, angeordnet ist, wie beispielsweise Pulver aus Tee-oder Kräuterblättern oder Pilzen oder Gemüsen oder einer Mischung hiervon oder aus Beeren.
